# EUROPÄISCHE PATENTSCHRIFT

(11) **EP 3 022 268 B1**
(45) Veröffentlichungstag und Bekanntmachung des Hinweises auf die Patenterteilung: **27.05.2020**
(21) Anmeldenummer: 14736362.6
(22) Anmeldetag: 02.07.2014
(51) Int. Cl.: C09J 7/00

(54) **MATERIAL ZUM ABDECKEN VON KLEBENDEN FLÄCHEN**
MATERIAL FOR COVERING ADHESIVE SURFACES
MATÉRIAU DE RECOUVREMENT DE SURFACES ADHÉSIVES

(30) Priorität: 18.07.2013 DE 102013107665
(43) Veröffentlichungstag der Anmeldung: 25.05.2016
(73) Patentinhaber: Buck Service GmbH, 71083 Herrenberg (DE)
(72) Erfinder: LEIPOLD, Joachim, 72760 Reutlingen (DE); JAESCHKE, Edgar, 70794 Filderstadt (DE); HAFERKAMP, Fabian, 70567 Stuttgart (DE)
(74) Vertreter: Mammel und Maser
(86) Internationale Anmeldenummer: PCT/EP2014/064061
(87) Internationale Veröffentlichungsnummer: WO 2015/007524

(56) Entgegenhaltungen:
- CH-A- 481 200

## Beschreibung

Die vorliegende Erfindung betrifft Materialien, die zum Abdecken von klebenden Flächen geeignet sind und die sich anschließend wieder im Wesentlichen rückstandsfrei entfernen lassen.

Insbesondere betrifft die vorliegende Erfindung ein Material zum Abdecken von Oberflächen klebender Sanitärmittel, insbesondere von stückförmigen Toilettenreinigungsmitteln, die auf wenigstens einer Seite wenigstens teilweise mit einer klebenden Paste beschichtet sind.

Seitens der Firma Buck-Chemie GmbH, Herrenberg, wurden klebende Pasten (Haftmittel) entwickelt, mittels denen stückförmige feste Mittel für den Sanitärbereich wie beispielsweise Rimblocks mit einer oder mehreren Phasen, Beduftungstabletten, Entkalkungstabletten, Reinigungstabletten direkt an der Oberfläche der Toilettenschüssel angeklebt werden können. Diese Mittel wie auch das die Befestigung bewirkende Haftmittel werden vom Spülstrom nach und nach abgespült, wie in der WO 2009/106220 A1 beschrieben.

Diese Haft- bzw. Klebemittel können Haftvermittler aus der Gruppe der Polyalkylenderivate, der hydrierten Polystyrolderivate, der Silikonsysteme, der Copolymerisate aus der Gruppe der Monoalkylester von Poly/Methyl Vinyl Ethern/Carbonsäureanhydriden, der Olefinhomopolymere und der Copolymere von zwei oder mehr Olefinen, wobei die Olefinhomopolymere und -copolymere auch teilhydriert, teiloxidiert oder über Pfropfmoleküle weiter funktionalisiert sein können, und aus der Gruppe der Polyalkylenimine, auch in alkoxylierter Form, der Polyetheramine (alkoxylierte Amine) und der Polyglycerinpolyetheralkylcarbonsäuren oder der diese Polymergruppen umfassenden Polymere oder Derivate umfassen. Auch hydrophobe Verbindungen wie Öle, Fette oder Wachse, auch teilhydriert, Silikonöle und unpolare Lösemittel sind als Haftvermittler möglich.

Die Viskosität dieser Haftmittel beträgt wenigstens 30 Pa.s, gemessen mit einem Haake-Viskosimeter, System Platte/Platte, Plattendurchmesser 10 mm, bei einem Schergefälle von 2,62 s⁻¹ und 20 °C.

Diese Haft- oder Klebemittel sind selbst so klebrig, dass sich mit ihnen selbst stückförmige Mittel von 40 g der Abmessung 20 mm x 30 mm x 60 mm mit der Seitenfläche der Abmessung 30 mm x 60 mm an der vertikalen Oberfläche einer Toilettenschüssel ankleben lassen und dort haften, bis sich das Sanitärmittel nach und nach - im Allgemeinen nach ca. 100 bis 300 Spülungen - aufgelöst hat. Das Verhältnis zwischen Klebemittelmenge und der Masse des stückförmigen Mittels kann zwischen 0,005:1 und 0,2:1, vorzugsweise zwischen 0,02:1 und 0,15:1 und besonders bevorzugt zwischen 0,03:1 und 0,1:1 betragen.

Das Haft- oder Klebemittel selbst wird ebenfalls beim Überspülen mit Wasser nach und nach entfernt, so dass kein unansehnlicher Rest in der Toilettenschüssel verbleibt.

Diese eine Klebeschicht aufweisenden Sanitärmittel könnten sich prinzipiell aus der Verpackung - ohne dass der Verbraucher mit dem Sanitärmittel, der Klebeschicht oder der Toilettenschüssel in Berührung kommt - applizieren lassen.

Problematisch bei der Verpackung solcher klebender Sanitärmittel ist jedoch die Abdeckung der Klebefläche, da übliche Schutzfolien für solche Klebeschichten, wie silikonierte oder fluorierte Folien oder Folien aus Papier, Polyethylen oder Polypropylen, an der Klebeschicht haften und diese beim Ablösen teilweise mit abreißen und so ein wirksames Haften/Kleben des Sanitärmittels an der Toilettenschüssel über die Lebensdauer des Mittels von im Allgemeinen 100 bis 300 Spülungen verhindern.

Um diese auf einer Seite klebenden Sanitärmittel zu bevorraten und auf hygienische Weise applizieren zu können, wurden deshalb spezielle Applikatoren entwickelt, die in der DE 10 2011 001 373 A1 und der DE 10 2009 039 675 A1 beschrieben sind. Diese Applikatoren dienen gleichzeitig als Verpackung. Bei diesen Applikatoren ist das Sanitärmittel mit der Klebeschicht in dem Applikator festgehalten oder verklemmt, derart, dass die Klebeschicht keine Fläche berührt und somit gegen ein unerwünschtes Ankleben an der Verpackung geschützt ist. Während der Applikation wird die Halterung/Verklemmung des Sanitärmittels in dem Applikator gelöst und das Sanitärmittel gegen die Toilettenschüssel gedrückt, um dort zu haften.

Diese Applikatoren bewirken zwar eine hygienische und einfache Applikation und den gewünschten Schutz der Klebeschicht. Nachteilig ist jedoch die relativ aufwändige Herstellung und Form solch eines Applikators für klebende Sanitärmittel und die Gefahr, dass beim Transport durch Bewegung in der Verpackung die Klebeschicht mit Teilen der Verpackung in Berührung kommt.

Die Sanitärmittel mit Klebeschicht könnten dann in den üblichen Blisterverpackungen mit Blisterkarte bevorratet und nach Ablösen der Blisterkarte direkt aus der Blisterverpackung - beispielsweise durch Druck auf die Blisterverpackung - in der Toilettenschüssel appliziert werden, wenn ein Material gefunden würde, das die Klebeschicht einerseits schützt, sich andererseits jedoch wieder im Wesentlichen rückstandsfrei von der Klebeschicht des Sanitärmittels vor dem Ankleben entfernen lässt.

Aus der DE 1 594 075 A und der CH 481 200 ist ein Klebeetikett mit einer beschichteten, gekreppten Unterlagfolie bekannt, die trotz gemeinsamer Schnittkante mit dem Klebeetikett auf einfache Weise ablösbar sein soll. Hierzu wird gelehrt, die Unterlagfolie als gekreppte/gewellte Struktur bereitzustellen, die unter Druck oder durch Reiben oder Biegen über das Etikett gestreckt oder anderweitig verformt werden kann, um einen Vorsprung über die Klebstoffschicht zu bilden, den man leicht ergreifen und damit die Unterlagfolie von dem Etikett entfernen kann.

Die Aufgabe der vorliegenden Erfindung besteht darin, ein Material anzugeben, mittels dessen sich eine haftende/klebende Schicht abdecken und sich dieses Material von der Klebeschicht anschließend wieder im Wesentlichen rückstandsfrei entfernen lässt.

Diese Aufgabe wird durch ein Abdeckmaterial gelöst, das eine im Wesentlichen ebene Oberfläche aufweist, wobei über die Oberfläche statistisch nach außen und/oder nach innen gerichtete Strukturen verteilt sind und wobei die in Richtung der Klebeschicht weisende Kontaktfläche maximal 30 % der Oberfläche des Materials beträgt.

Erstaunlicherweise wurde festgestellt, dass nicht etwa die herkömmlich als Antihaftbeschichtung eingesetzten vollständig glatten Oberflächen, sondern vielmehr Materialien mit nach außen oder nach innen gerichteten Strukturen nicht nur geeignet sind, die haftenden/klebenden Schichten abzudecken, sondern von diesen auch wieder im Wesentlichen rückstandsfrei entfernbar sind.

Unter im Wesentlichen rückstandsfrei entfernbar wird im Rahmen der vorliegenden Erfindung verstanden, dass nach dem Ablösen des Abdeckmaterials wenigstens 90 %, vorzugsweise wenigstens 99 % der Masse der Klebeschicht wieder von dem Abdeckmaterial abgelöst werden.

Unter nach außen und/oder nach innen gerichteten Strukturen auf der Oberfläche werden im Rahmen der vorliegenden Erfindung offene oder geschlossene Poren oder Öffnungen an/in der Oberfläche, makroporöse, oder wabenartige Strukturen verstanden. Solche Strukturen bewirken, dass in Richtung der Klebeschicht nur noch ein Bruchteil der Gesamtfläche als Kontaktfläche zur Verfügung steht.

Anders als in der DE 1 594 075 A sollen sich die Strukturen jedoch nicht durch Druck glätten lassen, denn dadurch würde die Kontaktfläche weiter vergrößert und das Loslösen des Materials von der Klebeschicht zudem erschwert. Vielmehr sollen die Strukturen ihre Form unter Druck auch im Wesentlichen beibehalten, denn in der vorliegenden Erfindung geht es nicht darum, das Abdeckmaterial mit einem hervorstehenden Zipfel auszustatten, damit dieser besser ergriffen werden kann, sondern die Kontaktfläche insgesamt zu vermindern.

Die nach außen und/oder innen gerichteten Strukturen auf einer ansonsten geraden Oberfläche können auch aus Fasern gebildet sein, wie es beispielsweise bei flächigen Filz- oder Vliesmaterialien der Fall ist. In diesem Fall bilden die sich entlang der Oberfläche erstreckenden Fasern die nach außen gerichteten Strukturen oder - in einer anderen Betrachtungsweise - die Freiräume oder "Lücken" zwischen den Fasern die nach innen von der Oberfläche weg gerichteten Strukturen.

Auch solche Vliese oder Filze sind statistisch über die Oberfläche des Materials verteilte Strukturen.

Auch flächige Materialien mit nach außen gerichteten, statistisch verteilten Beschichtungszentren wie beispielsweise Schmirgelpapier können als Abdeckmaterial eingesetzt werden.

Im Wesentlichen eben ist die Oberfläche dann, wenn sie unter Vernachlässigung der nach außen und/oder nach innen gerichteten Strukturen glatt bzw. eben wäre.

Damit das Abdeckmaterial über die gesamte Fläche wieder im Wesentlichen rückstandsfrei von der gesamten Klebeschicht entfernt werden kann, sollten die nach innen und/oder nach außen gerichteten Strukturen statistisch über die Gesamtoberfläche des Materials verteilt sein.

Unter "über die Oberfläche statistisch verteilten, nach außen und/oder innen gerichteten Strukturen" werden Strukturen verstanden, die über die gesamte Oberfläche statistisch verteilt sind. Hervorstehende Strukturen, die eine Vorzugsrichtung auf der Oberfläche, aufweisen, wie es beispielsweise bei den aus der DE 1 594 075 A bekannten gewellten Schutzunterlagen, wobei sich die Wellen alle in eine Raumrichtung erstrecken, der Fall ist, sind keine "über die Oberfläche statistisch verteilten Strukturen", da die einzelnen Wellen parallel zueinander verlaufen und somit eine Vorzugsrichtung aufweisen.

Dadurch, dass die Strukturen erfindungsgemäß statistisch auf der Oberfläche verteilt sind, gibt es auf der durch die nach außen und/oder nach innen gerichteten Strukturen gebildete Oberfläche auch keine Vorzugsrichtung.

Bei den nach innen gerichteten Strukturen ist die verbleibende Kontaktfläche im Allgemeinen eine zweidimensionale zusammenhängende Fläche, das heißt, es ist - bildlich gesprochen - möglich, von irgendeinem Punkt auf der Kontaktfläche zu einem anderen Punkt auf der Kontaktfläche zu gelangen, ohne die Kontaktfläche zu verlassen. Die Kontaktfläche ist somit eine miteinander verbundene, zusammenhängende bzw. vernetzte Fläche, die nicht unter Druck verformbar ist.

Vorzugsweise beträgt der Anteil der Kontaktfläche zu der Oberfläche des Materials maximal 20 % und besonders bevorzugt maximal 15 %.

Unter der Oberfläche A des Materials wird im Rahmen der vorliegenden Erfindung die durch die Länge I und Breite b des Materialstücks definierte zweidimensionale ebene Fläche A = b x I verstanden.

Die Materialoberfläche im Sinne der vorliegenden Erfindung ist die makroskopische Oberfläche des Materials; dreidimensionale Oberflächen von Poren oder nach außen weisenden Strukturen werden bei der Bestimmung der Materialoberfläche A nicht berücksichtigt.

Unter der Kontaktfläche K des Materials wird die Summe der Flächen verstanden, die an einer ebenen klebenden Schicht anliegen.

Die Kontaktfläche K wird erfindungsgemäß dadurch bestimmt, dass ein Stempelabdruck der (ebenen) Oberfläche des Abdeckmaterials angefertigt und auf der Grundlage des Stempelabdrucks der Schwarzanteil (d.h. die Größe der Kontaktfläche) zu der Größe des Stempelabdrucks (d.h. der Gesamtoberfläche A) bestimmt wird.

Nachdem die klebende Schicht hochviskos ist - die Viskosität beträgt im Allgemeinen wenigstens 30 Pa.s - dringt die Klebemasse nicht oder nur sehr geringfügig in die Poren des Abdeckmaterials ein, sondern berührt vielmehr nur die Kontaktfläche K, die durch die durch den Stempelabdruck definierte angefärbte Fläche - die Stempelfarbe dringt ebenfalls nicht in die Poren ein - bestimmt werden kann.

Besonders gute Ergebnisse wurden mit Materialien mit makroporösen Oberflächen erzielt. Als Materialien mit makroporösen Oberflächen eigenen sich insbesondere Schäume und Schaumstoffe mit gerade geschnittenen Flächen (d.h. in Wesentlichen "ebenen" Oberflächen), wobei die "ebenen Oberflächen" offene Poren aufweisen.

Offenporig ist eine Oberfläche, wenn sie eine hohe offene Porosität aufweist und - ideal betrachtet - eine Wabenstruktur aufweist.

Die Rohdichte des erfindungsgemäßen Abdeckmaterials, d.h. die Dichte der porösen Materialien basierend auf ihrem Volumen einschließlich der Porenräume, sollte wenigstens 20 kg/m³, vorzugsweise wenigstens 25 kg/m³ und besonders bevorzugt wenigstens 30 kg/m³ betragen.

Die Fläche der offenen Poren, d.h. die offene Fläche an der Oberfläche, die durch die "Umrandung" durch eine Pore definiert ist, sollte zwischen 50.000 und 1.000.000 µm² und vorzugsweise zwischen 200.000 und 400.000 µm² liegen. Die Breite des Stegs und die Poren sollten möglichst gering sein.

Das erfindungsgemäße Abdeckmaterial ist vorzugsweise eine Folie.

Das erfindungsgemäße Beschichtungsmaterial lässt sich auch einsetzen, um Flächen anderer klebender Materialien vorübergehend abzudecken, beispielsweise, um die Klebeschicht für ein späteres Ankleben zu schützen.

Ein wesentlicher Einsatzzweck von Materialien zum Abdecken klebender Schichten, die sich wieder im Wesentlichen rückstandsfrei von der klebenden Schicht entfernen lassen, wobei die Materialien eine im Wesentlichen ebene Oberfläche mit über die Oberfläche verteilten, nach außen und/oder nach innen gerichteten Strukturen aufweisen und wobei die verbleibende Kontaktfläche K des Abdeckmaterials in Richtung der klebenden Schicht maximal 30 % der Oberfläche A des Abdeckmaterials beträgt, sind klebende Schichten, die einen oder mehrere Haftvermittler aus der Gruppe der Polyalkylenderivate, der hydrierten Polystyrolderivate, der Silikonsysteme, der Copolymerisate aus der Gruppe der Monoalkylester von Poly/Methyl Vinyl Ethern/Carbonsäureanhydriden, der Olefinhomopolymere und der Copolymere von zwei oder mehr Olefinen, wobei die Olefinhomopolymere und -copolymere auch teilhydriert, teiloxidiert oder über Pfropfmoleküle weiter funktionalisiert sein können, und aus der Gruppe der Polyalkylenimine, auch in alkoxylierter Form, der Polyetheramine (alkoxylierte Amine) und der Polyglycerinpolyetheralkylcarbonsäuren oder der diese Polymergruppen umfassenden Polymere oder Derivate oder der hydrophoben Verbindungen wie Öle, Fette oder Wachse, auch teilhydriert, Silikonöle und unpolare Lösemittel umfassen.

Diese klebenden Schichten sind so klebrig, dass sich mit ihnen stückförmige Mittel von 40 g an der vertikalen Oberfläche einer Toilettenschüssel ankleben lassen und dort haften.

Für die Verwendung als Abdeckmaterial für solche sehr klebrigen Schichten auf stückförmigen Sanitärmitteln können neben den Materialien mit statistisch verteilten nach innen und/oder außen weisenden Strukturen auch Materialien mit anderweitig orientierten nach innen und/oder nach außen weisenden Strukturen, beispielsweise gewellte Strukturen oder gekreppte Obeflächen, eingesetzt werden.

Das stückförmige Sanitärmittel mit klebender/haftender Schicht und dem die Klebeschicht abdeckenden Abdeckmaterial kann in einer einfachen rechteckigen Blisterverpackung, die an der offenen Seite eine Blisterkarte aufweist, verpackt und gelagert werden. Zur Applikation wird zunächst die Blisterkarte entfernt und anschließend das Abdeckmaterial von der Klebeschicht abgezogen. Auf der offenen Seite der Blisterverpackung befindet sich nun die Klebeschicht, die im Allgemeinen eine glatte Oberfläche aufweist. Durch einen Druck auf die der offenen Seite gegenüberliegende Seite der Verpackung von außen kann das Sanitärmittel nun in der Toilettenschüssel mit der Klebeschicht gegen die Wand der Schüssel gedrückt werden, wo das Mittel mit der Klebeschicht haftet.

Das erfindungsgemäße Abdeckmaterial eignet sich im Übrigen auch zum Abdecken von Klebeschichten, die nicht vollständig glatt sind. In einem solchen Fall lässt sich das Abdeckmaterial noch einfacher ablösen, da in diesem Fall der Kontakt zwischen Abdeckmaterial und Klebeschicht nicht nur durch Verringerung der möglichen Kontaktfläche auf Seiten des Abdeckmaterials, sondern auch durch Verringerung der maximalen Kontaktfläche auf Seiten der Klebeschicht reduziert wird.

Es zeigt:
- **Fig. 1**: eine Draufsicht auf eine Schaumstoffoberfläche als Abdeckmaterial,
- **Fig. 2**: eine Seitenansicht auf die Schaumstoffoberfläche aus Fig. 1 und
- **Fig. 3**: ein Sanitärmittel mit Klebeschicht und Abdeckmaterial in einer Blisterverpackung.

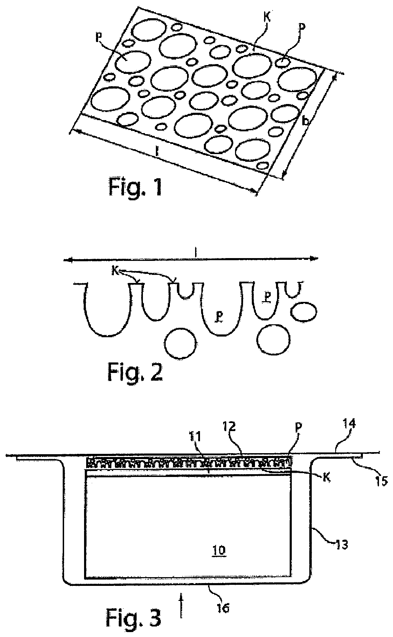

In **Fig. 1** ist ein Schaumstoffblock mit gerader Schnittfläche in der Draufsicht dargestellt. Die gerade Schnittfläche des Schaumstoffblocks, d.h. die Oberfläche, ist durch die Breite b und die Länge I definiert, Oberfläche A = I x b.

Die Oberfläche weist bei genauerer Betrachtung eine Vielzahl von statistisch verteilten offenen Poren P auf, so dass nur ein Teil der Oberfläche A, nämlich die in **Fig. 2** dargestellte Kontaktfläche K, letztendlich eine Fläche bildet, die die Klebeschicht wirklich berührt. Der Anteil der Kontaktfläche K zu der Oberfläche A sollte weniger als 30 % betragen. In **Fig. 3** ist ein stückförmiges festes Sanitärmittel 10 dargestellt, das mit einer Klebeschicht 11 beschichtet ist. Die Klebeschicht 11 sollte über das gesamte Sanitärmittel 10 etwa dieselbe Dicke aufweisen. Die Schichtdicke der Klebeschicht beträgt im Allgemeinen etwa 0,5 bis 5 mm, vorzugsweise zwischen 1mm bis 3 mm. Das Sanitärmittel 10 befindet sich in einer Blisterverpackung 13 und liegt mit seinen nicht beschichteten Seiten an der Blisterverpackung 13 an. Die nach außen weisende Seite der Klebeschicht 11 des Mittels 10 ist mit der erfindungsgemäßen Abdeckfolie 12 vollflächig abgedeckt. An der offenen Seite der Blisterverpackung 13 befindet sich eine Blisterkarte 14, die mit den Rändern 15 der Blisterverpackung 13 verklebt ist.

Wird die Blisterkarte 14 und anschließend die Abdeckfolie 12 entfernt, so kann das Mittel 10 mit der Klebeschicht 11 durch Druck auf die der Öffnung gegenüberliegende Seite 16 der Blisterverpackung in Pfeilrichtung in die Toilettenschüssel geklebt werden, ohne dass der Verbraucher mit der Toilettenschüssel oder dem Sanitärmittel in direkten Kontakt kommt.

Die Erfindung wird nachfolgend anhand von Ausführungsbeispielen und Vergleichsversuchen näher beschrieben.

### 1. Versuche zur Eignung verschiedener Materialien zur Abdeckung klebender Schichten:

Auf einen rechteckigen WC-Stein mit den Maßen 30 x 60 x 15 mm wird mithilfe einer Düse eine bestimmte Menge der Haftpaste in konstanter Schichtdicke aufgebracht.

Die Haftpaste besitzt folgende Zusammensetzung:

| Bestandteil | Bereich [%] | Bevorzugter Bereich [%] |
|---|---|---|
| Xanthan | 0,1 - 2 | 1 - 2 |
| Eltesol SCS93 | 1 - 10 | 5 - 7 |
| Tensopol USP94 | 20 - 60 | 40 - 55 |
| Versagel M1600 | 20 - 60 | 40 - 55 |

Auf den mit Haftpaste beschichteten Stein wird nun das jeweilige Abdeckmaterial, dessen Gewicht zuvor bestimmt wurde, locker aufgelegt, mit einer circa 130 g schweren Marmorplatte zur besseren Gewichtsverteilung abgedeckt und anschließend mit einem 500 g schweren Gewicht angepresst.

Das Abdeckmaterial liegt dabei mit einer im Wesentlichen ebenen Fläche auf der Haftpastenschicht auf.

Nach 60 Sekunden wird die Marmorplatte wieder entfernt und die Abdeckfolie von der Haftpaste abgezogen.

Die Differenz zwischen dem Gewicht der Abdeckfolie vor ("Teststreifengewicht vorher") und nach dem Versuch ("Teststreifengewicht nachher") ergibt die Menge an Haftpaste, die beim Abziehen der Folie auf dieser zurückgeblieben ist. Je größer die für das betreffende Material ermittelte Differenz, desto mehr Haftmittel bleibt nach dem Abziehen an dem Abdeckmaterial haften und desto ungeeigneter ist das betreffende Material.

In **Tabelle 1** ist die Menge nach dem Abziehen anklebender Paste ("Differenz") für verschiedene Materialien zusammengestellt:

**Tabelle 1:**

| Abdeckmaterial | Teststreifengewicht (g) | | Differenz (g) |
|---|---|---|---|
| | Vorher | Nachher | |
| Alufolie | 0,18 | 0,73 | 0,55 |
| Schaumstoff | 1,33 | 1,35 | 0,02 |
| Plexiglasplatte | 21,90 | 23,21 | 1,31 |
| Silikonpapier 9120 SM¹ | 0,72 | 1,67 | 0,95 |
| 3M Sel bstbenetzende Folie (77195W) | 2,50 | 2,59 | 0,09 |
| Teflonbeschichtetes Gewebe (Mure & Peyrot) | 2,14 | 3,22 | 1,08 |
| Ratioform Ölpapier | 0,42 | 0,75 | 0,33 |
| Laminierfolie ² | | | |
| Seite A | 0,49 | 0,99 | 0,50 |
| Seite B | 0,50 | 0,94 | 0,44 |

| | | | |
|---|---|---|---|
| ¹ dieses Material wird normalerweise als Trägermaterial für Selbstklebeetiketten benutzt. ² Dicke 80 µm, hochtransparent, besteht aus 2 Folien, einer aus Polyethylenterphthalat PET und einer aus Polypropylen. | | | |

Die Ergebnisse in Tabelle 1 zeigen, dass sich Schaumstoffe im Gegensatz zu herkömmlichen Abdeckmaterialien weitaus rückstandsfreier von der Klebeschicht entfernen lassen.

### 2. Versuch mit Abdeckmaterialien mit strukturierter Oberfläche:

Um den Zusammenhang zwischen der durch die nach außen und/oder nach innen gerichteten Strukturen auf der Oberfläche, die zu einer rauen oder mikroskopisch unebenen Oberfläche und zu Ablösbarkeit des Abdeckmaterials weiter zu untersuchen, wurden nachfolgend die Versuche gemäß 1. mit verschiedenen Schaumstoffen und anderen, eine strukturierte Oberfläche aufweisende Materialien wie Kreppband und Schmirgelpapier wiederholt. Das Ergebnis ist in der nachfolgenden **Tabelle 2** dargestellt:

**Tabelle 2**

| Abdeckmaterial | Teststreifengewicht (g) | | Differenz (g) | Rohdichte (kg/m³) |
|---|---|---|---|---|
| | Vorher | Nachher | | |
| Schaumstoff gelb PUR GR6290 | 1,70 | 1,72 | 0,02 | |
| Schaumstoff 3030 PUR | 0,89 | 0,91 | 0,02 | |
| Schaumstoff VB 120 (Verbund) | 3,96 | 3,98 | 0,02 | |
| Schaumstoff 4R 5560 PE | 1,49 | 1,50 | 0,01 | |
| Kreppband Tesa | 3,04 | 3,06 | 0,02 | |
| Schmirgelpapier (Bauhaus) 60er Körnung | 1,99 | 2,29 | 0,30 | |
| Filzdekorband | | | | |
| Seite A | 2,20 | 2,22 | 0,02 | |
| Seite B | 2,04 | 2,29 | 0,05 | |
| Dimer PUR-PE Collar 23510* 2mm anthrazit | 0,33 | 0,39 | 0,06 | 35 |
| Timepack PE-H 30** 2mm schwarz | 0,30 | 0,31 | 0,01 | 33 |
| Timepack PE-K 29*** | 0,27 | 0,27 | 0,00 | 29 |

| | | | | |
|---|---|---|---|---|
| * Collar 2254, 2508 und 23510: PUR-Polyether, erhältlich bei der Firma W. Dimer GmbH, Laufenburg, . ** PE-H 30, erhältlich bei der Firma Timepack GmbH, Korb. *** PE-K 29, physikalisch vernetzter Blockschaum, erhältlich bei der Firma Timepack GmbH, Korb. | | | | |

PE-K 29 und PE-H 30 sind beides nahezu identische Polyethylene, der PE-K 29 ist physikalisch und der PE-H 30 ist chemisch vernetzt. PE-H 30 weist feinere Poren und eine glattere Oberfläche als PE-K 29 auf.

Tabelle 2 zeigt, dass gute Ergebnisse mit Schaumstoffen aus PUR oder PE, mit Kreppband oder mit Filzdekorband erzielt werde.

Weitere durchgeführte Versuche mit Schaumstoffen als Abdeckmaterial belegen auch, dass mit Schaumstoffe aus Polyetylen oder PUR-Polyether mit einer Rohdichte über 25 kg/m³ die besten Ergebnisse erzielt werden. Gute Ergebnisse wurden auch mit Filzbändern und mit Krepppapier erreicht.

### 3. Langzeittests

Die mit der Haftpaste beschichteten WC-Steine mit den Abdeckmaterialen gemäß Versuch 1 und 2 werden in einem Klimaschrank vier Wochen jeweils für 24 Stunden im Wechsel bei 5 °C und einer relativen Luftfeuchtigkeit von 60 % und anschließend einer Temperatur von 40 °C bei 60 % Luftfeuchtigkeit gelagert und nach vier Wochen die Ablösbarkeit des Abdeckmaterials überprüft. Trotz extremer Bedingungen, denen die Materialproben ausgesetzt waren, blieb nur eine geringe Menge der Haftpaste an den untersuchten Proben PE-K 29 und PE-H 30, dem Filz und dem PUR Schaum Collar 2508 und 23510 haften.

Diese Versuche belegen, dass sich die erfindungsgemäßen Abdeckmaterialien auch nach langer Lagerung unter extremen Bedingungen wieder im Wesentlichen rückstandsfrei von der Klebeschicht ablösen lassen.

**Tabelle 3**

| | | | |
|---|---|---|---|
| Langzeittest2 | Startzeitpunkt: 27.02.2013 | | |
| Einstellungen: | Endzeitpunkt: 01.04.2013 | | |
| 24 Stunden 5°C, 60% rel. Feuchte | Gewicht pro WC-Stein ca. 620g | | |
| 24 Stunden 40°C, 60% rel. Feuchte | | | |
| | | | |

| Materialname | Teststreifengewicht (g) | | Differenz (g) |
|---|---|---|---|
| | vorher | nachher | |
| DIMER PUR Collar 2508 schwarz | 0,51 | 0,73 | 0,22 |
| DIMER PUR Collar 2254 anthrazit | 0,23 | 0,33 | 0,10 |
| DIMER PUR Collar 23510 anthrazit | 0,32 | 0,36 | 0,04 |
| Timepack PE H-30 2mm schwarz | 0,32 | 0,32 | 0,00 |
| Timepack PE H-30 4mm schwarz | 1,07 | 1,09 | 0,02 |
| Timepack PE K-29 2mm schwarz | 0,26 | 0,28 | 0,02 |
| Timepack PE K-29 4mm schwarz | 0,66 | 0,66 | 0,00 |

### 4. Überprüfung der Ablösbarkeit der erfindungsgemäßen Abdeckmaterialien von anderen klebenden oder haftenden Schichten:

Die Abdeckfolie PE-K-29, 2 mm und PE-H-30 wurde gemäß Versuch 1 auf verschiedene klebende Schichten aufgelegt und angedrückt. Nach einer Minute wurde die Abdeckfolie wieder abgezogen und der Rückstand der Klebeschicht auf der Abdeckfolie bestimmt.

Die Versuchsergebnisse sind in der nachfolgenden Tabelle 4a, b und c dargestellt.

**Tabelle 4a: Auftrag verschiedener Pasten auf PE-K-29, 2mm**

| **#** | **Material** | **Rohmaterial in g** | **nach Behandlung in g** | **Rückstand Paste in mg** | **Haftung** |
|---|---|---|---|---|---|
| 1 | 20130313_V22 | 0,22 | 0,222 | 2 | keine |
| 2 | 20130313_V19 | 0,228 | 0,231 | 3 | keine |
| 3 | PROBAU Aquadicht | 0,23 | 0,241 | 11 | keine |
| 4 | MEM Montage Kleber | 0,241 | 0,252 | 11 | keine |
| 5 | UHU Montagekleber | 0,23 | 0,255 | 25 | keine |
| 6 | PROBAU Montagekleber | 0,22 | 0,247 | 27 | keine |
| 7 | Sika Sikaflex-11 FC | 0,242 | 0,274 | 32 | keine |
| 8 | PROBAU Acryl Dichtmasse | 0,22 | 0,257 | 37 | keine |
| 9 | 20130313_V18.4 | 0,229 | 0,269 | 40 | keine |
| 10 | PROBAU Bau Silikon | 0,235 | 0,346 | 111 | keine |
| 11 | PROBAU Bitumen Dach und Fugendicht | 0,239 | 0,358 | 119 | wenig |
| 12 | 20130313_Probe Nr.106 | 0,232 | 0,383 | 151 | wenig |
| 13 | MEM Kamin und Ofen | 0,219 | 0,424 | 205 | wenig |
| 14 | 20130313_V13 | 0,228 | 0,464 | 236 | wenig |
| 15 | 20130313_Probe Nr.108 | 0,224 | 0,634 | 410 | stark |
| 16 | 20130313_V18.8 | 0,243 | 1,397 | 1154 | stark |

| | | | | | |
|---|---|---|---|---|---|
| * Haftung: keine: < 0,35 mg wenig: 0,35< Rückstand < 0,5 mg stark: >= 0,5 mg abgedeckte Fläche: 30 mm*60 mm | | | | | |

**Tabelle 4b: Auftrag verschiedener Pasten auf PE-H-30**

| **#** | **Material** | **Rohmaterial in g** | **nach Behandlung in g** | **Rückstand Paste in mg** | **Haftung** |
|---|---|---|---|---|---|
| 1 | 20130313_V22 | 0,169 | 0,169 | 0 | keine |
| 2 | 20130313_V19 | 0,182 | 0,183 | 1 | keine |
| 3 | 20130313_V18.4 | 0,198 | 0,227 | 29 | keine |
| 4 | 20130313_Probe Nr.106 | 0,206 | 0,377 | 171 | wenig |
| 5 | Sika Sikaflex-11 FC | 0,188 | 0,42 | 232 | wenig |
| 6 | 20130313_Probe Nr.108 | 0,209 | 0,467 | 258 | wenig |
| 7 | 20130313_V18.8 | 0,199 | 0,826 | 627 | stark |
| 8 | PROBAU Bau Silikon | 0,168 | 1,091 | 923 | stark |
| 9 | PROBAU Aquadicht | 0,189 | 1,258 | 1069 | stark |
| 10 | 20130313_V13 | 0,185 | 1,421 | 1236 | stark |
| 11 | MEM Kamin und Ofen | 0,18 | 1,721 | 1541 | stark |
| 12 | PROBAU Acryl Dichtmasse | 0,165 | 2,799 | 2634 | stark |
| 13 | PROBAU Bitumen Dach und Fugendicht | 0,182 | 3,282 | 3100 | stark |
| 14 | UHU Montagekleber | 0,166 | 4,166 | 4000 | stark |
| 15 | MEM Montage Kleber | 0,169 | 4,968 | 4799 | stark |
| 16 | PROBAU Montagekleber | 0,166 | 8,745 | 8579 | stark |

### Tabelle 4c: Zusammensetzung der untersuchten Pasten

### (siehe letzte Seite der Beschreibung)

Ein Vergleich der Versuche mit der Folie PE-K-20 und PE-H-30 zeigt, dass die untersuchten Materialien unterschiedlich stark an den Folien adsorbiert werden, obwohl es sich bei beiden Folien um sehr ähnliche Materialien, nämlich PE, handelt.

Dies wird zum einen auf unterschiedliche strukturelle Einflüsse, nämlich dem Verhältnis Kontaktfläche zu Oberfläche bzw. Summe aller Stegflächen zur Summe aller offener Porenflächen zurückgeführt.

Zudem spielt auch die Chemie der klebenden Materialien eine wesentliche Rolle. Unpolare Matrixelemente (Polyvest 800S oder Komponenten wie Versagel) führen zu geringem Anhaften, polare Matrixelemente (wie Lupasole oder Jeffamine) zu oftmals stärkerer Haftung.

Auch die Viskosität des klebenden Materials hat einen Einfluss. Je dünnflüssiger das klebende Material ist, desto stärker dringt es in die Poren ein und desto größer ist die Haftfläche.

### 5. Bestimmung des Anteils der Kontaktfläche K zur Oberfläche A

Um in Bezug auf die untersuchten Abdeckmaterialien das Verhältnis zwischen Kontaktfläche und Oberfläche des Materials zu bestimmen, wird ein Stempelabdruck der Oberfläche des Materials auf mm-Papier angefertigt. Dieser wird mit Delock PEN SCOPE fotografiert. Die Abbildungen werden mit einer Bildbearbeitungssoftware bearbeitet, um dann über das Histogramm den Schwarzanteil zu ermitteln. Hierzu werden die Aufnahmen in Schwarz-Weiß-Werte konvertiert und anschließend pixeln gelassen. Es werden jeweils 10 Messungen durchgeführt und die Werte anschließend gemittelt.

Der weiße Referenzwert wurde separat mit einem Stempel auf weißem Papier gemessen; das Raster macht etwa 2,5 % der Gesamtschwärzung aus.

In der nachfolgenden **Tabelle 5** ist das auf diese Weise bestimmte Verhältnis von Kontaktfläche zu Oberfläche für die bevorzugten Schaumstoffe PE-K-29 2 mm fein und grob, PE-H-30 PUR-Schaum und PUR-Schaum 2508 - gemittelt über 10 Messungen - zusammengefasst. Um den Einfluss der Rasterung zu überprüfen, wurde der Versuch sowohl mit feiner Rasterung "fein" als auch mit grober Rasterung "grob" durchgeführt. Ebenso ist in dieser Tabelle als Vergleich das Verhältnis K/A für Laminierfolie, die innen eine glatte Oberfläche und außen eine beschichtete Oberfläche aufweist, bestimmt.

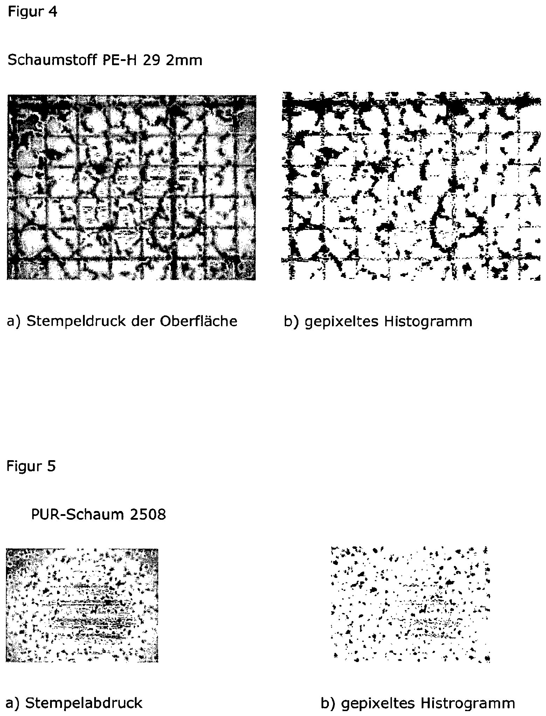

Die Abbildungen der original gestempelten Flächen und der daraus ermittelten Histogramme sind nachfolgend in den Figuren 4 und 5 abgebildet.

**Tabelle 5**

| Folie | Verhältnis von Kontaktfläche/Oberfläche (%) |
|---|---|
| | Gemittelt über 10 Messungen |
| PE-K-29 2 mm (gemessen auf weißem Papier) | 9,1 |
| PE-K-29 2 mm fein (siehe **Figur 4**) | 11,7 |
| PE-K-29 2 mm grob | 11,1 |
| PE-H-30 2 mm | * |
| PUR-Schaum (gemessen auf weißem Papier) siehe **Figur 5** | 6,2 |
| Laminierfolie (nicht porös = | |
| innen; beschichtet = außen) | |
| Innen | 19,5 |
| Außen | 46,9 |

### 6. REM Untersuchungen eines PUR-Schaums auf Porengröße und Stegbreite

Am NMI (Naturwissenschaftliches und Meidzinisches Institut an der Universität Tübingen) in Reutlingen wurden REM-Untersuchungen eines schwarzen PUR-Schaums (PE-K-29) durchgeführt, um die Topographie zu untersuchen. Im Vordergrund stand dabei die statistische Fläche der offenen Poren an der Oberfläche im Verhältnis zur Breite des umgebenden Steges. Hierzu wurden sowohl die Oberfläche des Schaums als auch die Seitenfläche des Schaums untersucht und die offene Porenfläche und Flächen des umgebenden Stegs vermessen.

Die Probe wurde im Eingangszustand dokumentiert.

Aus dem Schaum wurden zwei Teilstücke herauskonfektioniert. An dem Teilstück, welches zur Dokumentation der Seitenfläche dient, wurde mittels eines Skalpells eine neue Schnittfläche erzeugt. Die konfektionierten Proben wurden mittels C-Leittabs aus Aluminium-Probenteller geklebt und anschließend mit einer leitfähigen Schicht aus Au/Pd besputtert.

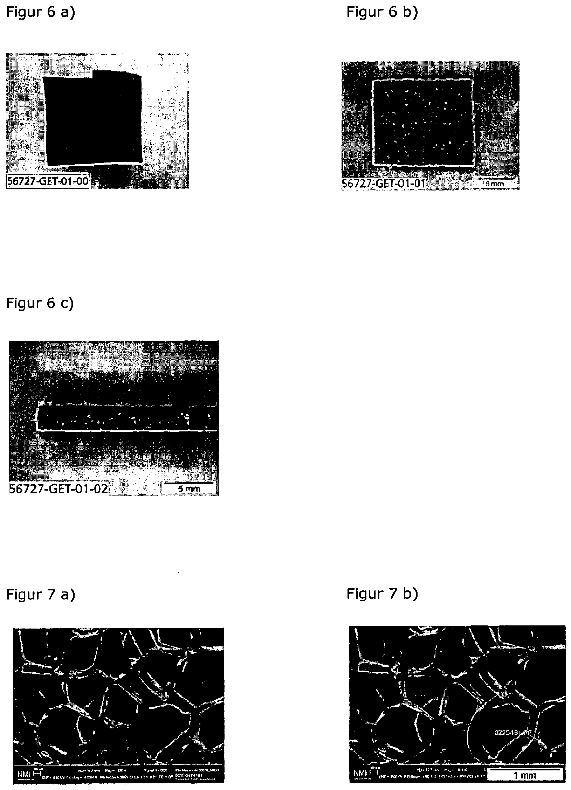

In **Figur 6** ist die lichtmikroskopische Abbildung
a) der Übersichtsansicht, b) der konfektionierten Probe in der Draufsicht und c) der Seitenfläche der konfektionierten Probe dargestellt.

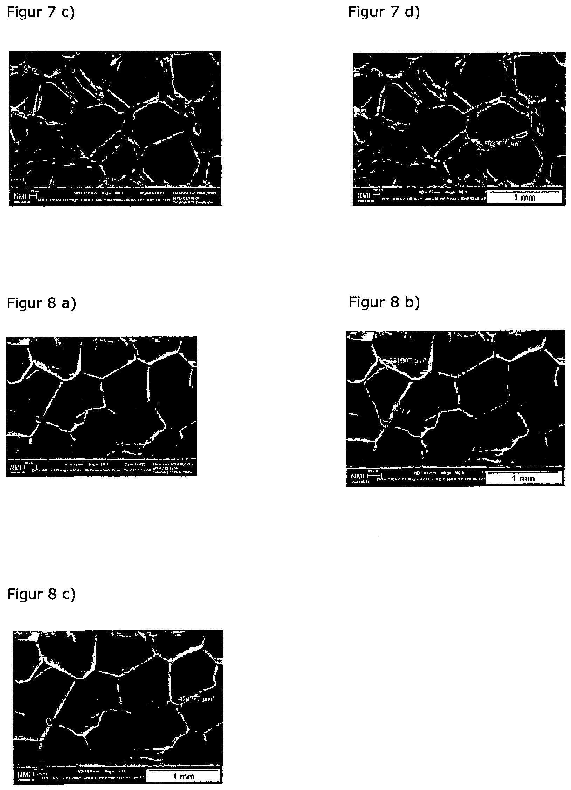

**Figur 7 a)** zeigt die REM Abbildungen (Rasterelektronenmikroskop) in der Draufsicht. Man erkennt Poren mit umgeklappten, flachliegenden Stegen an der Oberfläche und andeutungsweise die sechseckige Form der Poren.

**Figur 7 b)** zeigt einen Ausschnitt aus Figur 7a. Die Messung der linken Pore ergibt eine offene Fläche von 394.126 µm² und eine Stegfläche von 583.592 µm² - 394.126 µm² = 189.466 µm². Damit ergibt sich ein Verhältnis von offener Fläche dieser Pore zu der Stegfläche dieser Pore von 1:0,48.

Für die rechte Pore ergibt sich eine offene Porenfläche von 388.952 µm², eine Stegfläche von 822.548 µm² - 388.952 µm² = 433.596 µm² und damit ein Verhältnis von Pore zu Steg von 1 : 1,1.

**Figur 7 c)** zeigt eine weitere REM-Abbildung der Oberfläche in der Draufsicht mit Poren mit umgeklappten flachliegenden Stegen an der Oberfläche und andeutungsweise sechseckiger Form der Poren und Figur **7d****)** die Auswertung der untersuchten Pore aus Figur 7c. Danach ergibt sich für diese Pore eine Fläche von 354.319 µm², eine Stegfläche von 209.643 µm² und ein Verhältnis Pore : Steg von 1:0,59.

**Figur 8 a)** zeigt die Seitenfläche mit Poren mit senkrecht stehenden Stegen an der Oberfläche. Die sechseckige Form der Poren ist im Allgemeinen auch zu erkennen. **Figur 8 b)** zeigt den Ausschnitt aus Figur a) mit den Messwerten für die linke und rechte Pore. Für die linke Pore berechnet sich die Porenfläche: 298.880 µm², die Stegfläche 32.727 µm² und das Verhältnis Pore : Steg = 1 : 0,11. Für die rechte Pore ergibt sich eine Porenfläche von 476.051 µm², eine Stegfläche von 37.494 µm² und ein Verhältnis Pore : Stegfläche von 1 : 0,08.

**Figur 8 c)** zeigt einen weiteren Ausschnitt aus Figur 8 a) mit Auswertung. Für die linke Pore ergibt sich eine Fläche von 199.614 µm², eine Stegfläche von 35.391 µm² und ein Verhältnis Pore : Steg von 1 : 0,18. Für die rechte Pore ergibt sich eine Fläche von 388.641 µm², eine Stegfläche von 36.336 µm² und ein Verhältnis Pore : Stegfläche von 1:0,09.

Diese Untersuchungen zeigen, dass bei einer unbeschädigten Oberfläche, nämlich der frisch mit dem Skalpell geschnittenen Seitenfläche des Schaumstoffs, das Verhältnis offene Porenfläche : Stegfläche unterhalb von 1 : 0,2 liegt. Bei einer Oberfläche, die - wie die Oberseite des Schaumstoffs - schon einem Druck ausgesetzt worden ist, klappen die Stegflächen um und vergrößern somit die Kontaktfläche.

**Tabelle 4c**

| | 20133213_V18,4 | | 20130313_V18,8 | | 20130313_Probe Nr.106 | | 20132313_Probe Nr. 108 | | 20130313_V13 | | 20130313_V19 | | 20130313_V22 | |
|---|---|---|---|---|---|---|---|---|---|---|---|---|---|---|
| | Einwage in g | Gew.-% | Einwaage in g | Gew.-% | Einwaage in g | Gew.-% | Einwaage in g | Gew.-% % | Einwaage in g | Gew.-% | Einwaage in g | Gew.-% | Einwaage in g | Gew.-% |
| Tensopol USP 94 | 8 | 49,597 | 8 | 49,66 | 8 | 36,12 | 12 | 45,89 | 15,72 | 15,72 | 38,4 | 38,44 | 40,72 | 40,72 |
| Kelzan ASX | 0,16 | 0,992 | 0,16 | 0,99 | 0,16 | 0,72 | 0,16 | 0,61 | 1,07 | 1,07 | 0,7 | 0,70 | 1,02 | 1,02 |
| Lupasol SK | 5,92 | 36,702 | | 0,00 | | 0,00 | | 0,00 | | 0,00 | | | | 0 |
| Lupasol P | | | 5,9 | 36,62 | | 0,00 | | 0,00 | | 0,00 | | | | 0 |
| Orange Fun | 2,05 | 17,709 | 2,05 | 12,73 | | 9,26 | 2,05 | 7,84 | 13,14 | 13,14 | 9,7 | 9,71 | 10,42 | 10,42 |
| Marlinat 242/90T | | | | | 4,5 | 20,32 | 4,5 | 17,21 | | 0,00 | | | | |
| Emanon XLF | | | | | 1,5 | 6,77 | 1,5 | 5,74 | | 0,00 | | | | |
| Jeffamine T 5000 /(Triamin) | | | | | 5,94 | 26,82 | | 0,00 | | 0,00 | | | | |
| Jeffamine ST-104 (Dlamin) | | | | | | | 5,94 | 22,72 | | 0,00 | | | | |
| Polyvest 800S | | | | | | | | | 37,8 | 37,80 | 31,3 | 31,33 | 30,96 | 30,96 |
| Caloumsulfat | | | | | | | | | | 0,00 | 14,9 | 14,91 | | |
| Bentonit | | | | | | | | | 32,26 | 32,26 | | | 11,69 | 11,69 |
| Aerosil 300 | | | | | | | | | | | 4,9 | 4,90 | 5,19 | 5,19 |
| Summe | 16,13 | 100 | 16,11 | 100 | 22,15 | 100 | 26,15 | 100 | 99,99 | 100 | 99,9 | 100 | | 100 |
| Bemerkung | stark klebrige weiße Masse | | flicßrählje gelbe Masse | | Standfeste, rosafar-bene Masse | | standfeste weiße Masse | | Standfeste graue Masse | | feste weiße Masse | | feste grave Masse | |
| Polarer Antell | | 87,291 | | 87,27 | | 90,74 | | 92,16 | | 49,05 | | 58,26 | | 58,62 |

## Patentansprüche

1. Verwendung eines Materials (12) zum Abdecken klebender Schichten (11), welches Material (12) sich wieder im Wesentlichen rückstandsfrei von der klebenden Schicht (11) entfernen lässt, **dadurch gekennzeichnet, dass** das Material (12) eine im Wesentlichen ebene Oberfläche mit über die Oberfläche verteilten, nach außen und/oder nach innen gerichteten Strukturen aufweist, wobei die nach innen und/oder nach außen gerichteten Strukturen statistisch über die Gesamtoberfläche des Materials verteilt sind und die nach außen und/oder nach innen gerichteten Strukturen auf der Oberfläche offene oder geschlossene Poren oder wabenartige Strukturen sind, wobei die verbleibende Kontaktfläche K des Abdeckmaterials (12) in Richtung der klebenden Schicht maximal 30 % der Oberfläche A des Abdeckmaterials (12) beträgt.

2. Verwendung nach Anspruch 1, **dadurch gekennzeichnet, dass** die Oberfläche makroporös und/oder offenporig ist.

3. Verwendung nach einem der vorangegangenen Ansprüche, **dadurch gekennzeichnet, dass** der Anteil der Kontaktfläche K zu der Gesamtfläche A des Materials (12) maximal 20 % und besonders bevorzugt maximal 15 % beträgt.

4. Verwendung nach einem der vorangegangenen Ansprüche, **dadurch gekennzeichnet, dass** die Rohdichte des Abdeckmaterials (12) wenigstens 20 kg/m³, vorzugsweise wenigstens 25 kg/m³ und besonders bevorzugt von wenigstens 30 kg/m³ beträgt.

5. Verwendung nach einem der vorangegangenen Ansprüche, **dadurch gekennzeichnet, dass** die gemittelte Fläche der offenen Poren an der Oberfläche zwischen 50.000 µm² und 1.000.000 µm², vorzugsweise zwischen 200.000 µm² und 400.000 µm² beträgt.

6. Verwendung nach einem der vorangegangenen Ansprüche, **dadurch gekennzeichnet, dass** das Abdeckmaterial (12) eine Folie ist.

7. Verwendung des Materials (12) nach einem der vorangegangenen Ansprüche zur Abdeckung einer haftenden/klebenden Schicht (11), die einen oder mehrere Haftvermittler aus der Gruppe der Polyalkylenderivate, der hydrierten Polystyrolderivate, der Silikonsysteme, der Copolymerisate aus der Gruppe der Monoalkylester von Poly/Methyl Vinyl Ethern/Carbonsäureanhydriden, der Olefinhomopolymere und der Copolymere von zwei oder mehr Olefinen, wobei die Olefinhomopolymere und -copolymere auch teilhydriert, teiloxidiert oder über Pfropfmoleküle weiter funktionalisiert sein können, und aus der Gruppe der Polyalkylenimine, auch in alkoxylierter Form, der Polyetheramine (alkoxylierte Amine) und der Polyglycerinpolyetheralkylcarbonsäuren oder der diese Polymergruppen umfassenden Polymere oder Derivate oder der hydrophoben Verbindungen wie Öle, Fette oder Wachse, auch teilhydriert, Silikonöle und unpolare Lösemittel umfasst.

8. Verwendung des Materials (12) nach einem der vorangegangenen Ansprüche zum Abdecken klebender Schichten (11), wobei die klebende Schicht (11) einen oder mehrere Haftvermittler aus der Gruppe der Polyalkylenderivate, der hydrierten Polystyrolderivate, der Silikonsysteme, der Copolymerisate aus der Gruppe der Monoalkylester von Poly/Methyl Vinyl Ethern/Carbonsäureanhydriden, der Olefinhomopolymere und der Copolymere von zwei oder mehr Olefinen, wobei die Olefinhomopolymere und -copolymere auch teilhydriert, teiloxidiert oder über Pfropfmoleküle weiter funktionalisiert sein können, und aus der Gruppe der Polyalkylenimine, auch in alkoxylierter Form, der Polyetheramine (alkoxylierte Amine) und der Polyglycerinpolyetheralkylcarbonsäuren oder der diese Polymergruppen umfassenden Polymere oder Derivate oder hydrophobe Verbindungen wie Öle, Fette oder Wachse, auch teilhydriert, Silikonöle und unpolare Lösemittel umfasst.

9. Verwendung nach einem der vorangegangenen Ansprüchen, **dadurch gekennzeichnet, dass** die klebende Schicht (11) so klebrig ist, dass sich mit ihr stückförmige Mittel (10) von 40 g an der vertikalen Oberfläche einer Toilettenschüssel ankleben lassen und dort haften.

## Claims

1. Use of a material (12) for covering adhesive layers (11), said material (12) being able to be removed substantially without residue from the adhesive layer (11), **characterised in that** the material (12) has a substantially planar surface having structures distributed across the surface and directed outwardly and/or inwardly, wherein the inwardly and/or outwardly directed structures are distributed statistically across the whole surface of the material, and the outwardly and/or inwardly directed structures on the surface are open or closed pores or honey-combed structures, wherein the remaining contact surface K of the covering material (12) in the direction of the adhesive layer is maximum 30% of the surface A of the covering material (12).

2. Use according to claim 1, **characterised in that** the surface is macroporous and/or open-pored.

3. Use according to one of the preceding claims, **characterised in that** the portion of the contact surface K in relation to the whole surface A of the material (12) is maximum 20% and, particularly preferably, maximum 15%.

4. Use according to one of the preceding claims, **characterised in that** the bulk density of the covering material (12) is at least 20 kg/m³, preferably at least 25 kg/m³ and particularly preferably at least 30 kg/m³.

5. Use according to one of the preceding claims, **characterised in that** the averaged surface of the open pores on the surface is between 50,000µm² and 1,000,000µm², preferably between 200,000µm² and 400,000µm².

6. Use according to one of the preceding claims, **characterised in that** the covering material (12) is a film.

7. Use of the material (12) according to one of the preceding claims for covering a bonding/adhesive layer (11), which comprises one or more bonding agents from the group of the polyalkenyl derivatives, the hydrated polystyrene derivatives, the silicon systems, the copolymerisates from the group of the mono-alkyl esters of poly/methyl vinyl ethers/carboxylic acid anhydrides, the olefin homopolymers and the copolymers of two or more olefins, wherein the olefin homopolymers and copolymers can also be partially hydrated, partially oxidised or further functionalised via graft molecules, and from the group of the polyalkyleneimines, also in alkoxylated form, the polyetheramines (alkoxylated amines) and the polyglycerin polyether alkyl carbonic acid or the polymers or derivatives comprising these polymer groups or the hydrophobic compounds such as oils, fats or waxes, also partially hydrated, silicon oils and nonpolar solvents.

8. Use of the material (12) according to one of the preceding claims for covering adhesive layers (11), wherein the adhesive layer (11) comprises one or more bonding agents, from the group of polyalkenyl derivatives, the hydrated polystyrene derivatives, the silicon systems, the copolymerisates from the group of the mono-alkyl esters of poly/methyl vinyl ethers/carboxylic acid anhydrides, the olefin homopolymers and the copolymers of two or more olefins, wherein the olefin homopolymers and copolymers can also be partially hydrated, partially oxidised or further functionalised via graft molecules, and from the group of the polyalkyleneimines, also in alkoxylated form, the polyetheramines (alkoxylated amines) and the polyglycerin polyether alkyl carbonic acids or the polymers or derivatives comprising these polymer groups, or hydrophobic compounds such as oils, fats or waxes, also partially hydrated, silicon oils and nonpolar solvents.

9. Use according to one of the preceding claims, **characterised in that** the adhesive layer (11) is so adhesive that it allows to adhere pieced means (10) of 40g to the vertical surface of a toilet bowl and sticks there.

## Revendications

1. Utilisation d'un matériau (12) destiné à recouvrir des couches collantes (11), lequel matériau (12) est susceptible d'être retiré de ladite couche collante (11) en ne laissant sensiblement aucun résidu, **caractérisée en ce que** le matériau (12) présente une surface sensiblement plane comportant des structures dirigées vers l'extérieur et/ou vers l'intérieur qui sont réparties sur ladite surface, lesdites structures dirigées vers l'intérieur et/ou vers l'extérieur étant réparties de façon aléatoire sur la totalité de la surface du matériau et lesdites structures dirigées vers l'extérieur et/ou vers l'intérieur consistant en des structures en nid d'abeilles ou en des pores ouverts ou fermés sur ladite surface, la surface de contact K du matériau de recouvrement (12) restant le long de la couche représentant au maximum 30 % de la surface A du matériau de recouvrement (12).

2. Utilisation selon la revendication 1, **caractérisée en ce que** la surface du matériau est macroporeuse et/ou à pores ouverts.

3. Utilisation selon l'une des revendications précédentes, **caractérisée en ce que** la proportion de la surface de contact K par rapport à la surface totale A du matériau (12) ne dépasse pas 20 % et plus préférablement ne dépasse pas 15 %.

4. Utilisation selon l'une des revendications précédentes, **caractérisée en ce que** la densité brute du matériau de recouvrement (12) est d'au moins 20 kg/m³, de préférence d'au moins 25 kg/m³ et tout préférablement d'au moins 30 kg/m³.

5. Utilisation selon l'une des revendications précédentes, **caractérisée en ce que** la surface moyenne des pores ouverts sur la surface est comprise entre 50 000 µm² et 1 000 000 µm², de préférence entre 200 000 µm² et 400 000 µm².

6. Utilisation selon l'une des revendications précédentes, **caractérisée en ce que** le matériau de recouvrement (12) est un film.

7. Utilisation du matériau (12) selon l'une des revendications précédentes destiné à recouvrir une couche adhésive/collante (11), celle-ci comprenant un ou plusieurs promoteurs d'adhérence issus du groupe des dérivés du polyalkylène, des dérivés du polystyrène hydrogéné, des systèmes silicones, des copolymérisats issus du groupe des esters monoalkyliques de poly/méthylvinyléthers/anhydrides d'acide carboxylique, des homopolymères oléfiniques et des copolymères de deux oléfines ou plus, lesdits homopolymères et copolymères oléfiniques pouvant également être partiellement hydrogénés, partiellement oxydés ou être fonctionnalisés davantage par des molécules de greffage, et issus du groupe des polyalkylène-imines, y compris sous forme alcoxylée, des polyétheramines (amines alcoxylées) et des acides polyglycérolpolyétheralkylcarboxyliques ou des polymères ou dérivés comprenant ces groupes polymères, ou des composés hydrophobes, tels que des huiles, des graisses ou des cires, y compris partiellement hydrogénées, des huiles siliconées et des solvants non polaires.

8. Utilisation du matériau (12) selon l'une des revendications précédentes destiné à recouvrir des couches collantes (11), la couche collante (11) comprenant un ou plusieurs promoteurs d'adhérence issus du groupe des dérivés du polyalkylène, des dérivés du polystyrène hydrogéné, des systèmes silicones, des copolymérisats issus du groupe des esters monoalkyliques de poly/méthylvinyléthers/anhydrides d'acide carboxylique, des homopolymères oléfiniques et des copolymères de deux oléfines ou plus, lesdits homopolymères et copolymères oléfiniques pouvant également être partiellement hydrogénés, partiellement oxydés ou être fonctionnalisés davantage par des molécules de greffage, et issus du groupe des polyalkylène-imines, y compris sous forme alcoxylée, des polyétheramines (amines alcoxylées) et des acides polyglycérolpolyétheralkylcarboxyliques ou des polymères ou dérivés ou composés hydrophobes comprenant ces groupes polymères tels que des huiles, des graisses ou des cires, y compris partiellement hydrogénées, des huiles siliconées et des solvants non polaires.

9. Utilisation selon l'une des revendications précédentes, **caractérisée en ce que** la couche collante (11) est suffisamment collante pour permettre de coller un produit (10) formant un bloc de 40 g sur la surface verticale d'une cuvette de toilettes et de l'y maintenir.
